# EUROPEAN PATENT SPECIFICATION

(11) **EP 1 735 240 B1**
(45) Date of publication and mention of the grant of the patent: **27.07.2011**
(21) Application number: 05733932.7
(22) Date of filing: 12.04.2005
(51) Int. Cl.: C01F 7/02, C01F 7/44

(54) **Method for making seeded particulate boehmite material**
Verfahren zur Herstellung von keimhaltigem teilchenförmigem Boehmitmaterial
Procédé de production de particules de boehmite ensemencées

(30) Priority: 13.04.2004 US 823400; 14.05.2004 US 845764
(43) Date of publication of application: 27.12.2006
(73) Proprietor: Saint-Gobain Ceramics and Plastics, Inc., Worcester, MA 01615-0138 (US)
(72) Inventor: BAUER, Ralph, Niagara Falls, Ontario L2H 4R6 (CA); YENER, Doruk, Grafton, Massachusetts 01519 (US); SKOWRON, Margaret, Niagara Falls, New York 14304 (US); BARNES, Martin, Ransomville, New York 14131 (US)
(74) Representative: Leidescher, Thomas
(86) International application number: PCT/US2005/012038
(87) International publication number: WO 2005/100244

(56) References cited:
- EP-A- 0 563 653
- US-A- 4 344 928
- US-A- 4 797 139
- US-A1- 2003 197 300
- US-B1- 6 440 552

## Description

The present invention generally relates to a method for forming boehmite particulate material . More specifically, the present invention relates to a method for forming seeded boehmite particulate material having morphological features.

### Description of the Related Art

Boehmite particulate material finds particular application as a desirable raw material for forming aluminous products, for example, alumina abrasive grains having high performance characteristics. In this context, the US Patent 4,797,139, commonly owned by the present Assignee, discloses a particular process for forming boehmite particulate material, which is then used as a feedstock material for later stage processing to form alumina abrasive grains. As described, the boehmite material is formed by a seeded process, and is limited in scope to boehmite particulate material that is adapted to form alumina abrasive grains. As such, the disclosed particulate material has particularly desired spherical morphology, which makes it suitable for abrasive applications.

Prior art document US20030197300 teaches the preparation of boehmite by seeded conversion of a precursor in an autoclave. The mixture having a weight ratio of precursor to seed of 10:1 is heated at a temperature of 180°C. Before heating in the autoclave is nitric acid added to the container which results in the formation of needle shape boehmite.

Beyond abrasive applications, there is a particular desirability for creating boehmite particulate material having varying morphology. Since particulate morphology can have a profound impact upon the applications of the material, a need has arisen in the art for creation of new materials for applications beyond abrasives, including fillers utilized in specialty coating products and various polymer products. Other applications include those in which the boehmite material is utilized in its as-formed state, rather than as a feedstock material. In addition to the interest in creating new materials, processing technology enabling the formation of such materials needs to be developed as well. In this regard, such processing technology is desirably cost effective, is relatively straightforward to control, and provides high yields.

### SUMMARY

According to one aspect, boehmite particulate material formed by seeded processing has an aspect ratio of not less than 3:1.

According to another aspect of the present invention, a boehmite particulate material is formed by a process that includes providing a boehmite precursor and boehmite seeds in a suspension, and heat treating the suspension to convert the boehmite precursor into boehmite particulate material. The particulate material may have a certain morphology, such as a relatively high aspect ratio, such as not less than about 3:1.

Still further, according to another aspect of the present invention, boehmite particulate material is formed by a process including providing a boehmite precursor and boehmite seeds in a suspension, and heat-treating the suspension to convert the boehmite precursor into boehmite particulate material. Here, the boehmite particulate material is comprised of platelets, and has an aspect of not less than about 3:1.

### BRIEF DESCRIPTION OF THE DRAWINGS

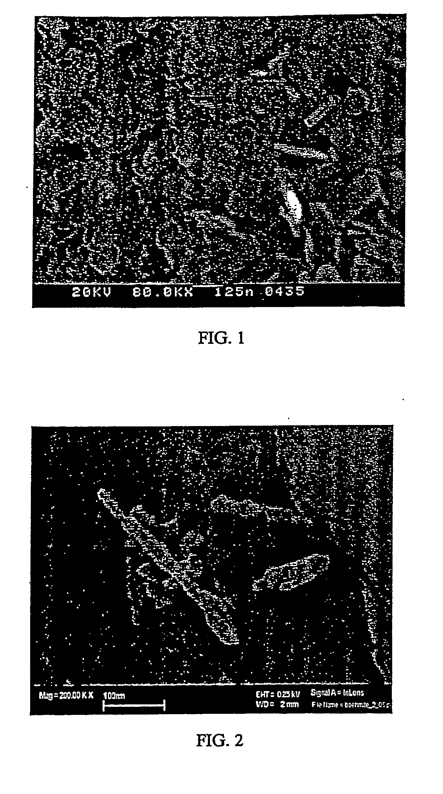

FIG. 1 is an SEM micrograph illustrating platelet-shaped boehmite particulate material.

FIG. 2 is an SEM micrograph illustrating needle-shaped boehmite particulate material.

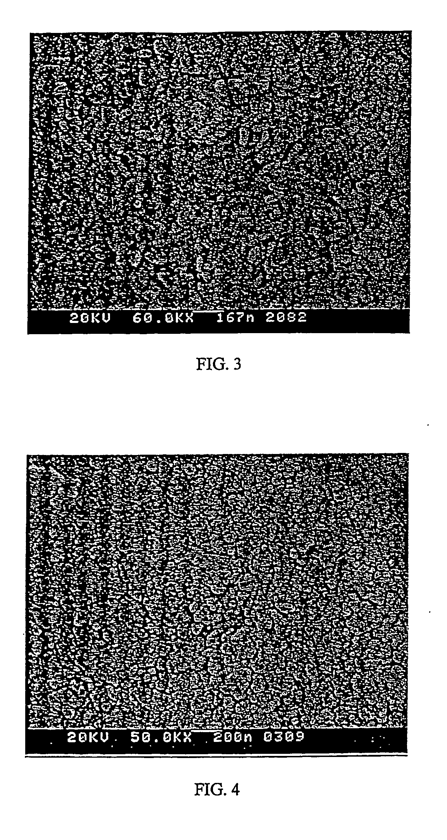

FIG. 3 is an SEM micrograph illustrating ellipsoid-shaped boehmite particulate material.

FIG. 4 is an SEM micrograph illustrating spherical-shaped boehmite particulate material.

### DESCRIPTION OF THE PREFERRED EMBODIMENT(S)

According to an embodiment of the present invention, a boehmite particulate material is formed by a process that includes providing a boehmite precursor and boehmite seeds in a suspension, and heat treating (such as by hydrothermal treatment) the suspension (alternatively sol or slurry) to convert the boehmite precursor into boehmite particulate material formed of particles or crystallites. According to a particular aspect, the boehmite particulate material has a relatively elongated morphology, described generally herein in terms of aspect ratio, described below.

The term "boehmite" is generally used herein to denote alumina hydrates including mineral boehmite, typically being Al₂O₃·H₂O and having a water content on the order of 15%, as well as psuedoboehmite, having a water content higher than 15%, such as 20-38% by weight. It is noted that boehmite (including psuedoboehmite) has a particular and identifiable crystal structure, and accordingly unique X-ray diffraction pattern, and as such, is distinguished from other aluminous materials including other hydrated aluminas such as ATH (aluminum trihydroxide) a common precursor material used herein for the fabrication of boehmite particulate materials.

The aspect ratio, defined as the ratio of the longest dimension to the next longest dimension perpendicular to the longest dimension, is generally not less than 3:1, and preferably not less than 4:1, or 6:1. Indeed, certain embodiments have relatively elongated particles, such as not less than 9:1, 10:1, and in some cases, not less than 14:1. The particles may be further characterized with reference to a secondary aspect ratio defined as the ratio of the second longest dimension to the third longest dimension. . The secondary aspect ratio generally describes the cross-sectional geometry of the particles in a plane perpendicular to the longest dimension.

Platey or platelet-shaped particles generally have an elongated structure having the aspect ratios described above in connection with the needle-shaped particles. However, platelet-shaped particles generally have opposite major surfaces, the opposite major surfaces being generally planar and generally parallel to each other. In addition, the platelet-shaped particles may be characterized as having a secondary aspect ratio greater than that of needle-shaped particles, generally not less than about 3:1, such as not less than about 6:1, or even not less than 10:1. Typically, the shortest dimension or edge dimension, perpendicular to the opposite major surfaces or faces, is generally less than 50 nanometers.

Morphology of the boehmite particulate material may be further defined in terms of particle size, more particularly, average particle size. Here, the seeded boehmite particulate material, that is, boehmite formed through a seeding process (described in more detail below) has a relatively fine particle or crystallite size. Generally, the average particle size is not greater than about 1000 nanometers, and fall within a range of about 100 to 1000 nanometers. Other embodiments have even finer average particle sizes, such as not greater than about 800 nanometers, 600 nanometers, 500 nanometers, 400 nanometers, and even particles having an average particle size smaller than 300 nanometers, representing a fine particulate material.

As used herein, the "average particle size" is used to denote the average longest or length dimension of the particles. Due to the elongated morphology of the particles, conventional characterization technology is generally inadequate to measure average particle size, since characterization technology is generally based upon an assumption that the particles are spherical or near-spherical. Accordingly, average particle size was determined by taking multiple representative samples and physically measuring the particle sizes found in representative samples. Such samples may be taken by various characterization techniques, such as by scanning electron microscopy (SEM).

The present seeded boehmite particulate material has been found to have a fine average particle size, while oftentimes competing non-seeded based technologies are generally incapable of providing such fine average particle sizes. In this regard, it is noted that oftentimes in the literature, reported particle sizes are not set forth in the context of averages as in the present specification, but rather, in the context of nominal range of particle sizes derived from physical inspection of samples of the particulate material. Accordingly, the average particle size will lie within the reported range in the prior art, generally at about the arithmetic midpoint of the reported range, for the expected Gaussian particle size distribution. Stated alternatively, while non-seeded based technologies may report fine particle size, such fine sizing generally denotes the lower limit of an observed particle size distribution and not average particle size.

Likewise, in a similar manner, the above-reported aspect ratios generally correspond to the average aspect ratio taken from representative sampling, rather than upper or lower limits associated with the aspect ratios of the particulate material. Oftentimes in the literature, reported particle aspect ratios are not set forth in the context of averages as in the present specification, but rather, in the context of nominal range of aspect ratios derived from physical inspection of samples of the particulate material. Accordingly, the average aspect ratio will lie within the reported range in the prior art, generally at about the arithmetic midpoint of the reported range, for the expected Gaussian particle morphology distribution. Stated alternatively, while non-seeded based technologies may report aspect ratio, such data generally denotes the lower limit of an observed aspect ratio distribution and not average aspect ratio.

In addition to aspect ratio and average particle size of the particulate material, morphology of the particulate material may be further characterized in terms of specific surface area. Here, the commonly available BET technique was utilized to measure specific surface area of the particulate material. According to embodiments herein, the boehmite particulate material has a relatively high specific surface area, generally not less than about 10 m²/g, such as not less than about 50 m²/g, 70 m²/g, or not less than about 90 m²/g. Since specific surface area is a function of particle morphology as well as particle size, generally the specific surface area of embodiments was less than about 400 m²/g, such as less than about 350 or 300 m²/g.

Turning to the details of the processes by which the boehmite particulate material may be manufactured, generally ellipsoid, needle, or platelet-shaped boehmite particles are formed from a boehmite precursor, typically an aluminous material including bauxitic minerals, by hydrothermal treatment as generally described in the commonly owned patent described above, US Patent 4,797,139. More specifically, the boehmite particulate material may be formed by combining the boehmite precursor and boehmite seeds in suspension, exposing the suspension (alternatively sol or slurry) to heat treatment to cause conversion of the raw material into boehmite particulate material, further influenced by the boehmite seeds provided in suspension. Heating is generally carried out in an autogenous environment, that is, in an autoclave, such that an elevated pressure is generated during processing. The pH of the suspension is generally selected from a value of less than 7 or greater than 8, and the boehmite seed material has a particle size finer than about 0.5 microns. Generally, the seed particles are present in an amount greater than about 1 % by weight of the boehmite precursor (calculated as Al₂O₃), and heating is carried out at a temperature greater than about 120°C, such as greater than about 125°C, or even greater than about 130°C, and at a pressure greater than about 5,86 bar (85 psi), such as greater than about 6,21 bar (90 psi), (100 psi,) or even greater than about 6,89 bar (110 psi)

The particulate material may be fabricated with extended hydrothermal conditions combined with relatively low seeding levels and acidic pH, resulting in preferential growth of boehmite along one axis or two axes. Longer hydrothermal treatment may be used to produce even longer and higher aspect ratio of the boehmite particles and/or larger particles in general.

Following heat treatment, such as by hydrothermal treatment, and boehmite conversion, the liquid content is generally removed, such as through an ultrafiltration process or by heat treatment to evaporate the remaining liquid. Thereafter, the resulting mass is generally crushed, such to 100 mesh. It is noted that the particulate size described herein generally describes the single crystallites formed through processing, rather than the aggregates which may remain in certain embodiments (e.g., for those products that call for and aggregated material).

According to data gathered by the present inventors, several variables may be modified during the processing of the boehmite raw material, to effect the desired morphology. These variables notably include the weight ratio, that is, the ratio of boehmite precursor to boehmite seed, the particular type or species of acid or base used during processing (as well as the relative pH level), and the temperature (which is directly proportional to pressure in an autogenous hydrothermal environment) of the system.

In particular, when the weight ratio is modified while holding the other variables constant, the shape and size of the particles forming the boehmite particulate material are modified. For example, when processing is carried at 180°C for two hours in a 2 weight % nitric acid solution, a 90:10 ATH:boehmite seed ratio forms needle-shaped particles (ATH being a species of boehmite precursor). In contrast, when the ATH:boehmite seed ratio is reduced to a value of 80:20, the particles become more elliptically shaped. Still further, when the ratio is further reduced to 60:40, the particles become near-spherical. Accordingly, most typically the ratio of boehmite precursor to boehmite seeds is not less than about 60:40, such as not less than about 70:30 or 80:20. However, to ensure adequate seeding levels to promote the fine particulate morphology that is desired, the weight ratio of boehmite precursor to boehmite seeds is generally not greater than about 98:2. Based on the foregoing, an increase in weight ratio generally increases aspect ratio, while a decrease in weight ratio generally decreased aspect ratio.

Further, when the type of acid or base is modified, holding the other variables constant, the shape (e.g., aspect ratio) and size of the particles are affected. For example, when processing is carried out at 100°C for two hours with an ATH:boehmite seed ratio of 90:10 in a 2 weight % nitric acid solution, the synthesized particles are generally needle-shaped, in contrast, when the acid is substituted with HCl at a content of 1 weight % or less, the synthesized particles are generally near spherical. When 2 weight % or higher of HCl is utilized, the synthesized particles become generally needle-shaped. At 1 weight % formic acid, the synthesized particles are platelet-shaped. Further, with use of a basic solution, such as 1 weight % KOH, the synthesized particles are platelet-shaped. If a mixture of acids and bases is utilized, such as 1 weight % KOH and 0.7 weight % nitric acid, the morphology of the synthesized particles is platelet-shaped.

Suitable acids and bases include mineral acids such as nitric acid, organic acids such as formic acid, halogen acids such as hydrochloric acid, and acidic salts such as aluminum nitrate and magnesium sulfate. Effective bases include, for example, amines including ammonia, alkali hydroxides such as potassium hydroxide, alkaline hydroxides such as calcium hydroxide, and basic salts.

Still further, when temperature is modified while holding other variables constant, typically changes are manifested in particle size. For example, when processing is carried out at an ATH:boehmite seed ratio of 90:10 in a 2 weight % nitric acid solution at 150°C for two hours, the crystalline size from XRD (x-ray diffraction characterization) was found to be 115 Angstroms. However, at 160°C the average particle size was found to be 143 Angstroms. Accordingly, as temperature is increased, particle size is also increased, representing a directly proportional relationship between particle size and temperature.

Example 1, Plate-shaped particle synthesis

An autoclave was charged with 3,36 kg (7.42 lb), of Hydral 710 aluminum trihydroxide purchased from Alcoa 0,37 kg (0.82 lb) of boehmite obtained from SASOL under the name-Catapal B pseudoboehmite; (66.5 lb) 30,16 kg of deionized water; 0,017 kg (0.037 lb) potassium hydroxide; and 0.081 kg (0.18 lb) of 22 wt% nitric acid. The boehmite was pre-dispersed in 2,27 kg (5 lb) of the water and 0,081 kg (0.18 lb) of the acid before adding to the aluminum trihydroxide and the remaining water and potassium hydroxide.

The autoclave was heated to 185°C. over a 45 minute period and maintained at that temperature for 2 hours with stirring at 530 rpm. An autogenously generated ' pressure of about 11,24 bar (163 psi) was reached and maintained. Thereafter the boehmite dispersion was removed from the autoclave. After autoclave the pH of the sol was about 10. The liquid content was removed at a temperature of 65°C. The resultant mass was crushed to less than 100 mesh. The SSA of the resultant powder was about 62 m²/g_{.}

According to embodiments described herein, a relatively powerful and flexible process methodology may be employed to engineer desired morphologies into the final boehmite product. Of particular significance, embodiments utilize seeded processing resulting in a cost-effective processing route with a high degree of process control which may result in desired fine average particle sizes as well as controlled particle size distributions. The combination of (i) identifying and controlling key variables in the process methodology, such as weight ratio, acid and base species and temperature, and (ii) seeding-based technology is of particular significance, providing repeatable and controllable processing of desired boehmite particulate material morphologies.

Aspects of the present invention enable utilization of the boehmite particulate material in a wide variety of applications, such as a filler in specialty coatings as well as in polymer products. Indeed, the particulate material may be individually and uniformly dispersed within solvents (particularly including polar solvents), and/or polymers without forming aggregates by conventional compounding processes. In addition, the boehmite particulate material may be individually and uniformly dispersed with a non-polar solvents, and/or polymers without forming aggregates by utilizing conventional dispersing agents such as silane coupling agents. Of course, particular applications of the boehmite particulate material are not so limited and may find commercial use in a variety of applications.

While the invention has been illustrated and described in the context of specific embodiments, it is not intended to be limited to the details shown, since various modifications and substitutions can be made without departing in any way from the scope as defined by the claims. For example, additional or equivalent substitues can be provided and additional or equivalent production steps can be employed. As such, further modifications and equivalents of the invention herein disclosed may occur to persons skilled in the art using no more than routine experimentation, and all such modifications and equivalents are believed to be within the scope as defined by the following claims.

## Claims

1. A method for forming boehmite particulate material, comprising:
providing a boehmite precursor and boehmite seeds in a suspension at a weight ratio not less than 60:40 of boehmite precursor to boehmite seeds; and
heat treating the suspension at a temperature greater than 120°C to convert the boehmite precursor into boehmite particulate material, the boehmite particulate material predominately being comprised of platelet-shaped particles having an aspect ratio of not less than 3:1 and having a secondary aspect ratio of not less than 3:1,
wherein the-method is performed in the presence of a base, formic acid or a mixture of acids and bases.

2. The method of claim 1, wherein heat treating is carried out at a temperature greater than 130°C.

3. The method of claim.1, wherein heat treating is carried out at a pressure greater than 5, 86 bar (85 psi).

4. The method of claim 1, wherein the weight ratio is not less than 80:20.

5. The method of claim 4, wherein a weight ratio of boehmite precursor to boehmite seeds is not greater than 98:2.

6. The method of claim 1, wherein the boehmite particulate material has an average particle size of not greater than 1000 nm.

7. The method of claim 1, further including setting at least one of heat treatment temperature, type of acid or base in the suspension, or weight ratio of boehmite precursor to boehmite seeds such that the boehmite particulate material has an average particle size not greater than 1000 nm.

8. The method of claim 7, wherein the acid or base is chosen from the group consisting of mineral acids, organic acids, halogen acids, acidic salts, amines, alkali hydroxides, alkaline hydroxides, and basic salts.

9. The method of claim 7, wherein setting includes modifying at least one of heat treatment temperature, type of acid or base, or ratio of boehmite precursor to boehmite seeds.

10. The method of claim 9, wherein the ratio of boehmite precursor to boehmite seeds is increased to increase aspect ratio, or decreased to decrease aspect ratio.

11. The method of claim 9, wherein the heat treatment temperature is increased to increase particle size, or decreased to reduce particle size.

12. The method of claim 9, wherein the type of acid or base is modified to modify aspect ratio.

## Patentansprüche

1. Verfahren zur Bildung von teilchenförmigem Böhmitmaterial, bei dem man:
einen Böhmitvorläufer und Böhmitkeime in einer Suspension in einem Gewichtsverhältnis von Böhmitvorläufer zu Böhmitkeimen von mindestens 60:40 bereitstellt rund
die Suspension zur Umwandlung des Böhmitvorläufers in teilchenförmiges Böhmitmaterial bei einer Temperatur von mehr als 120°C wärmebehandelt, wobei das teilchenförmige Böhmitmaterial überwiegend aus plättchenförmigen Teilchen mit einem Aspektverhältnis von mindestens 3:1 und einem sekundären Aspektverhältnis von mindestens 3:1 besteht,
wobei man das Verfahren in Gegenwart von einer Base, Ameisensäure oder einer Mischung von Säuren und Basen durchführt.

2. Verfahren nach Anspruch 1, bei dem man die Wärmebehandlung bei einer Temperatur von mehr als 130°C durchführt.

3. Verfahren nach Anspruch 1, bei dem man die Wärmebehandlung bei einem Druck von mehr als 5,86 bar (85 psi) durchführt.

4. Verfahren nach Anspruch 1, bei dem das Gewichtsverhältnis mindestens 80:20 beträgt.

5. Verfahren nach Anspruch 4, bei dem das Gewichtsverhältnis von Böhmitvorläufer zu Böhmitkeimen höchstens 98:2 beträgt.

6. Verfahren nach Anspruch 1, bei dem das teilchenförmige Böhmitmaterial eine mittlere Teilchengröße von höchstens 1000 nm aufweist.

7. Verfahren nach Anspruch 1, bei dem man ferner die Wärmebehandlungstemperatur, die Art der Säure oder Base in der Suspension und/oder das Gewichtsverhältnis von Böhmitvorläufer zu Böhmitkeimen so einstellt, daß das teilchenförmige Böhmitmaterial eine mittlere Teilchengröße von höchstens 1000 nm aufweist.

8. Verfahren nach Anspruch 7, bei dem man die Säure oder Base aus der Gruppe bestehend aus Mineralsäuren, organischen Säuren, Halogensäuren, sauren Salzen, Aminen, Alkalihydroxiden, alkalischen Hydroxiden und basischen Salzen auswählt.

9. Verfahren nach Anspruch 7, bei dem das Einstellen das Modifizieren der Wärmebehandlungstemperatur, die Art der Säure oder Base und/oder das Verhältnis von Böhmitvorläufer zu Böhmitkeimen umfaßt.

10. Verfahren nach Anspruch 9, bei dem man das Verhältnis von Böhmitvorläufer zu Böhmitkeimen zur Erhöhung des Aspektverhältnisses erhöht oder zur Erniedrigung des Aspektverhältnisses erniedrigt.

11. Verfahren nach Anspruch 9, bei dem man die Wärmebehandlungstemperatur zur Erhöhung der Teilchengröße erhöht oder zur Erniedrigung der Teilchengröße erniedrigt.

12. Verfahren nach Anspruch 9, bei dem man die Art der Säure oder Base zur Mofidizierung des Aspektverhältnisses modifiziert.

## Revendications

1. Procédé de formation de matériau particulaire de type boehmite, comprenant les étapes consistant à:
mettre en suspension un précurseur de boehmite et des germes de boehmite dans un rapport pondéral entre le précurseur de boehmite et les germes de boehmite non inférieur à 60:40; et
soumettre la suspension à un traitement thermique à une température supérieure à 120°C pour convertir le précurseur de boehmite en matériau particulaire de type boehmite, le matériau particulaire de type boehmite étant en majorité constitué de particule lamellaires ayant un rapport d'aspect non inférieur à 3:1 et ayant un rapport d'aspect secondaire non inférieur à 3:1, lequel procédé est réalisé en présence d'une base, d'acide formique ou d'un mélange d'acides et de bases.

2. Procédé selon la revendication 1, dans lequel le traitement thermique est effectué à une température supérieure à 130°C.

3. Procédé selon la revendication 1, dans lequel le traitement thermique est effectué à une pression supérieure à 5,86 bars (85 psi).

4. Procédé selon la revendication 1, dans lequel le rapport pondéral est non inférieur à 80:20.

5. Procédé selon la revendication 4, dans lequel le rapport pondéral entre le précurseur de boehmite et les germes de boehmite n'est pas supérieur à 98:2.

6. Procédé selon la revendication 1, dans lequel le matériau particulaire de type boehmite a une granulométrie moyenne non supérieure à 1000 nm.

7. Procédé selon la revendication 1, comportant en outre le réglage d'au moins un paramètre parmi la température de traitement thermique, le type d'acide ou de base dans la suspension, ou le rapport pondéral entre le précurseur de boehmite et les germes de boehmite de telle sorte que le matériau particulaire de type boehmite ait une granulométrie moyenne non supérieure à 1000 nm.

8. Procédé selon la revendication 7, dans lequel l'acide ou la base est choisi dans le groupe constitué par les acides minéraux, les acides organiques, les acides halogénés, les sels acides, les amines, les hydroxydes alcalins, les hydroxydes alcalino-terreux et les sels basiques.

9. Procédé selon la revendication 7, dans lequel le réglage consiste à modifier au moins un paramètre parmi la température de traitement thermique, le type d'acide ou de base, ou le rapport entre le précurseur de boehmite et les germes de boehmite.

10. Procédé selon la revendication 9, dans lequel le rapport entre le précurseur de boehmite et les germes de boehmite est accru pour augmenter le rapport d'aspect, ou réduit pour diminuer le rapport d'aspect.

11. Procédé selon la revendication 9, dans lequel la température de traitement thermique est élevée pour augmenter la granulométrie, ou abaissée pour réduire la granulométrie.

12. Procédé selon la revendication 9, dans lequel le type d'acide ou de base est modifié pour modifier le rapport d'aspect.
